# EUROPÄISCHE PATENTSCHRIFT

(11) **EP 2 332 022 B1**
(45) Veröffentlichungstag und Bekanntmachung des Hinweises auf die Patenterteilung: **24.07.2019**
(21) Anmeldenummer: 09756245.8
(22) Anmeldetag: 29.09.2009
(51) Int. Cl.: G06F 1/32, H02J 9/00, H03K 19/00

(54) **VERFAHREN UND ANORDNUNG ZUR ENERGIEEINSPARUNG BEI MIKROPROZESSOREN**
METHOD AND ARRANGEMENT FOR SAVING ENERGY IN MICROPROCESSORS
DISPOSITIF ET PROCÉDÉ D'ÉCONOMIE D'ÉNERGIE POUR UN MICROPROCESSEUR

(30) Priorität: 30.09.2008 DE 102008049714
(43) Veröffentlichungstag der Anmeldung: 15.06.2011
(73) Patentinhaber: Unify GmbH & Co. KG, 80807 München (DE)
(72) Erfinder: ERNST, Edmund, 81373 München (DE)
(74) Vertreter: Fritzsche, Thomas
(86) Internationale Anmeldenummer: PCT/EP2009/007003
(87) Internationale Veröffentlichungsnummer: WO 2010/037524

(56) Entgegenhaltungen:
- EP-A1- 0 522 720
- DE-A1- 3 929 236
- US-A- 5 964 879
- US-A1- 2004 028 070
- US-A1- 2007 076 498
- US-A1- 2007 088 962

## Beschreibung

Die Erfindung betrifft ein Verfahren zum Betreiben eines elektronischen Systems und eine Anordnung zum Betreiben eines elektronischen Systems.

Energiegewinnung und Energienutzung steht zunehmend im Focus, nicht nur wegen der Kosten, sondern letztlich auch im Rahmen der Diskussionen zur globalen Erwärmung beziehungsweise generell zur effizienten Nutzung von Ressourcen.

Dies hat auch mittlerweile zu gesetzlichen Vorschriften aber auch zu einer Änderung im Käuferverhalten geführt, die ebenfalls eine Optimierung des Energiebedarfs erfordern.

Aus diesem Grund wird das Thema Energiesparen auch im Umfeld von Kommunikationssystemen, insbesondere für schnurgebundene Geräte in diesem Umfeld, immer wichtiger.

Zur Optimierung des Energieverbrauchs eines elektronischen Systems sind dabei eine Vielzahl von Verfahren bekannt, welche im Wesentlichen auf folgenden Ansätzen beruhen:
Ein erster Ansatz besteht darin, dass bei einem System, das aus mehreren, zumindest teilweise unabhängigen Teilsystemen beruht, nur jene Teilsysteme aktiv gehalten werden, die zu einem gegebenen Zeitpunkt notwendig sind, wie beispielsweise Datenschnittstellen, Mensch-Maschine-Schnittstellen nur bei entsprechendem Datenverkehr beziehungsweise Betriebszuständen, aber auch zentrale Prozessoreinheiten (CPU). Dieser Ansatz ist auch als so genannter "sleep mode" oder "idle mode" bekannt.

Ein weiterer Ansatz besteht darin, dass das System beziehungsweise das jeweilige Teilsystem, insbesondere bei CPU-Einheiten und dergleichen, lastabhängig mit einer dem jeweiligen Betriebszustand angemessenen Energiespeisung betrieben wird. Dabei wird die bekannte Tatsache genutzt, dass sich der Energieverbrauch derartiger Implementierungen weitestgehend proportional zur Taktfrequenz verhält, wie z.B. in DE 692 29 819 T2; US 2007/ 0 076498 A1 und US 2007/ 0 088962 A1 offenbart. Nachteilig hierbei ist, dass die Taktreduzierung dabei natürlich zu einer entsprechend verschlechterten (Rechner-)Performanz führt.

Dieses Vorgehen ist vor allem dann angebracht, wenn aufgrund von dynamischen Anforderungen an das System, beispielsweise an ein so genanntes "Refresh"- beziehungsweise dem Aufweckverhalten gestellte Anforderungen, ein komplettes Inaktivschalten des Systems nicht möglich ist.

Ein kritischer Punkt bei diesen Ansätzen liegt darin, die relevanten Indikatoren zu bestimmen, die es erlauben, das jeweilige System in einen der oben genannten Betriebszustände zu überführen sowie bei Bedarf sicher und in einem angemessenen Zeitraum wieder in einen Normalzustand zurückzuführen.

Üblicherweise wird versucht, dies durch eine geeignete Software-Implementierung zu verwirklichen, welche beispielsweise durch einen so genannten "Scheduler" Kenntnis über die laufenden Betriebszustände hat und diese Kenntnis zur Steuerung beziehungsweise Regelung der Energiespar-Betriebszustände nutzt.

Der vorliegenden Erfindung liegt die Aufgabe zugrunde, eine Vorrichtung und ein Verfahren anzugeben, die die vorstehend genannte Optimierung bei Elektrogeräten, insbesondere Geräten der Kommunikationstechnik, verbessern.

Gelöst wird diese Aufgabe durch ein Verfahren mit den Merkmalen des Patentanspruchs 1 und durch eine Anordnung mit den Merkmalen des Patentanspruchs 12.

Bei dem erfindungsgemäßen Verfahren zum Betreiben eines elektronischen Systems wird eine Energieaufnahme, insbesondere Stromaufnahme, von zumindest Teilen des Systems derart reguliert, dass aufgrund zumindest eines innerhalb des Systems erfassten zeitlichen Verlauf des Stroms ein zumindest teilweise schaltungstechnisch generierter Gradientenwert des Stromwertes gebildet wird und auf Grundlage des Gradientenwerts eine schaltungstechnische Manipulation von zumindest einer physikalischen Größe des Systems erfolgt.

Einer der Vorteile des erfindungsgemäßen Verfahrens liegt in der Möglichkeit eine Reduzierung des Energieverbrauchs mit nahezu ausschließlicher schaltungstechnischer Realisierung, da die Stromaufnahme als Indikation genutzt wird. Ferner wird auf erfinderische Weise erkannt, dass sich mit zunehmender Aktivität eines elektronischen Systems bei an sich sonst konstanter Schaltungsparameter der Strombedarf und damit das Maß der verbrauchten Energie erhöht. Die Steigung (Gradient) des Stroms kann somit auf erfinderische Weise als Indikator für den Verlauf der Aktivität eines elektronischen Systems genutzt werden.

Die Erfindung ist dabei auf vorteilhafte Weise derart weitergebildet, dass als Manipulation eine Regelung zumindest eines Taktsignals des Systems durchgeführt wird, denn hiermit kann bei positivem Gradienten und somit erhöhter Aktivität der manipulierten Schaltung eine höhere Taktung gewährt werden, während bei nachlassender Aktivität, die durch einen negativen Gradienten angezeigt wird, die Taktung und somit der Energieverbrauch reduziert werden kann.

Einen Beitrag zur möglichst reinen schaltungstechnischen Realisierung des Verfahrens wird auf vorteilhafte Weise dadurch geleistet, dass der Stromverlauf einem Analog-Digital-Wandler "A/D-Wandler" zugeführt wird, wobei das Ausgangssignal des A/D-Wandlers der Gradientenwertgenerierung zugeführt wird.

Dieser Beitrag wird noch erhöht, wenn man die Erfindung derart weiterbildet, dass die Manipulation, insbesondere die Taktsignalregelung, durch einen "Field-Programmable Gate Array" FPGA initiiert wird. Hierdurch wird zudem noch eine Flexibilisierung erzielt, da durch die Programmierbarkeit des Array weitere Freiheitsgrade sowohl bei der Implementierung als auch bei der Durchführung des Verfahrens gewährleistet sind.

Vorzugsweise wird dabei im Falle einer Taktsignalregelung durch das FPGA, seitens des FPGA, das Taktsignal als Ausgangssignal des FPGA an das System weitergegeben. Hierdurch hat man die Taktsignalregelung in einem Schaltungselement verwirklicht, das die genannten zusätzlichen Freiheitsgrade bietet und zudem eine Möglichkeit der Integration und somit auch Platzeinsparung geschaffen. Ferner sind FPGAs aufgrund ihrer Häufigkeit kostengünstig zu erwerben.

Alternativ kann die Erfindung auch derart weitergebildet werden, dass die Manipulation, insbesondere die Taktsignalregelung, durch ein "Phase-locked-loop" PLL initiiert wird. Hierdurch ist ebenfalls eine schaltungstechnische Realisierung des Verfahrens gestützt.

Bevorzugt wird dabei die PLL so vorteilhaft eingesetzt, dass im Falle einer Taktsignalregelung seitens des PLL, das Taktsignal als Ausgangssignal des PLL an das System weitergegeben wird.

Betrifft die Regelung des Taktsignals die Frequenz des Taktsignals, wird unmittelbar auf die Aktivität des geregelten (Teil-)Systems eingewirkt. Dies wirkt sich somit auch auf die Geschwindigkeit der Regelung aus.

Insbesondere, wenn man besondere Freiheitsgrade gewähren will, die rein schaltungstechnisch nicht zu realisieren sind, wirkt die Weiterbildung der Erfindung bei der die Manipulation des Systems durch mindestens einen Prozess gesteuert wird, wobei der Prozess, insbesondere in einem stets aktiven Teil des Systems durchgeführt wird, besonders vorteilhaft, da sie eben zum einen die genannten Freiheitsgrade bietet und zum anderen insbesondere bei Durchführung in einem Teil, der ohnehin nie teilweise oder ganz deaktiviert werden würde, erreicht wird, dass Teile, die deaktiviert werden könnten, nicht aufgrund der Durchführung des Prozesses aktiv gehalten werden müssten.

Bei einer Weiterbildung wird die Manipulation derart vorteilhaft durchgeführt, dass sie parametrisiert erfolgt und zwar derart, dass die Reaktion auf Gradientenwerte festlegbar ist. Hierdurch können beispielsweise Nutzereinstellung zur Anpassung an individuelle Wünsche bzw. technische Vorgaben vorgenommen beziehungsweise zu einem späteren Zeitpunkt angepasst werden.

Wird durch die Manipulation das Ausgangssignal derart bereitgehalten, dass zum System externe Geräte manipuliert werden, kann der erfindungsgemäße Effekt ohne Änderung bestehender Systeme auf vorteilhafte Weise auf diese übertragen werden.

Die erfindungsgemäße Anordnung zum Betreiben eines elektronischen Systems ist derart ausgestaltet, dass Mittel zur Durchführung des Verfahrens gemäß einem der vorhergehenden Verfahrensansprüche vorgesehen sind und verwirklicht und unterstützt somit die Vorteile des erfindungsgemäßen Verfahrens sowie seiner Weiterbildungen.

Dabei wird die Anordnung vorteilhafter Weise so weitergebildet, dass die Mittel zumindest teilweise als hochintegrierte Schaltung ausgestaltet sind. Hierdurch kann platzsparend, hocheffektiv und durch etwaige Massenproduktion besonders günstig die erfindungsgemäße Verfahrensweise in elektronische Systeme eingebaut werden.

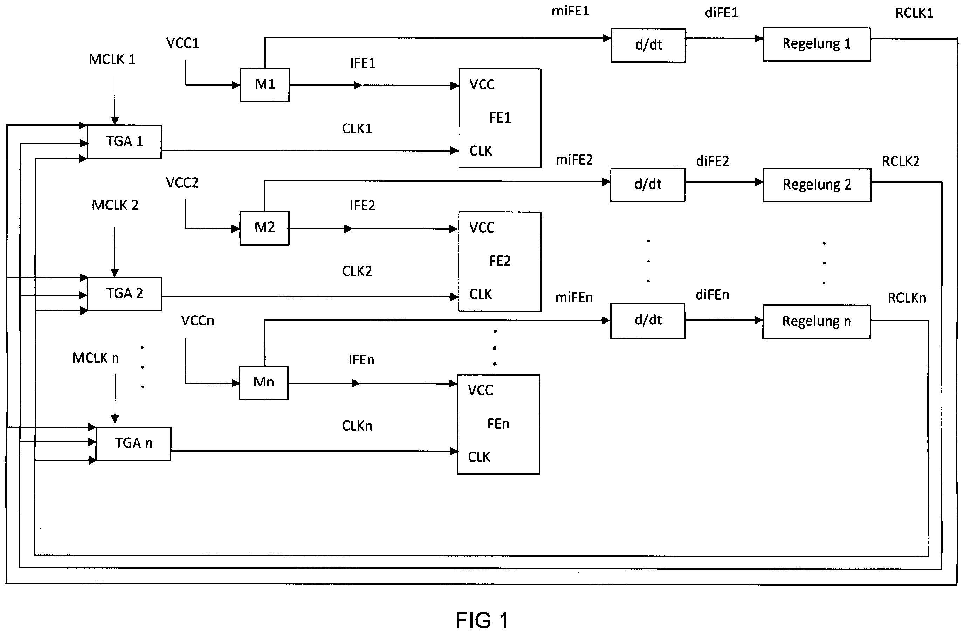

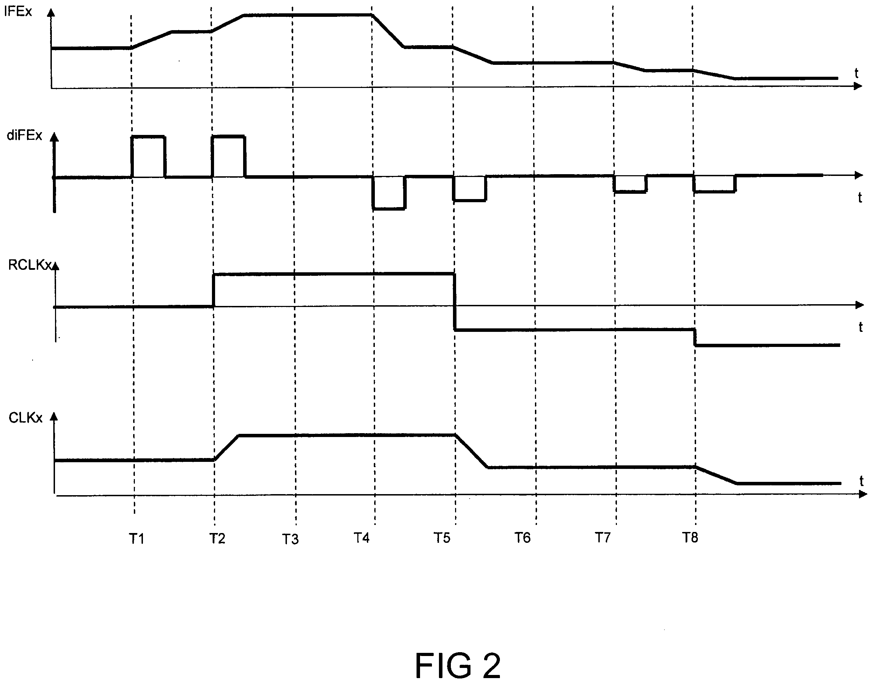

Weitere Vorteile sowie Details der Erfindung werden anhand eines in den Figuren 1 und 2 dargestellten Ausführungsbeispiels der Erfindung nachfolgend näher erläutert. Dabei zeigt die
Figur 1 ein Ausführungsbeispiel eines das erfindungsgemäße Verfahren verwirklichenden elektronischen Systems,
Figur 2 beispielhaft die Abhängigkeiten von einzelnen erfindungsrelevanten Signalen.

Das im Folgenden beschriebene Ausführungsbeispiel des erfindungsgemäßen Verfahrens nutzt erfindungsgemäß zur Steuerung bzw. Regelung von Energiespar-Betriebszuständen exklusiv oder schwerpunktmäßig Hardware- (HW-)Implementierungen.

Dies weist erhebliche Vorteile auf, wie später im Detail erörtert wird.

Alternativ bzw. ergänzend kann dies durch eine geeignete Softwareimplementierung gestützt werden. Dies ist insbesondere dann sinnvoll wenn die Steuerung bzw. Regelung nicht exklusiv, sondern schwerpunktmäßig erfolgen soll.

Wie bereits erläutert, beruht die dargestellte Implementierung des erfindungsgemäßen Verfahrens auf der physikalischen Eigenschaft von elektronischen Systemen, wonach bei einer gegebenen Versorgungsspannung und gegebener Taktfrequenz der Stromverbrauch mit zunehmender Aktivität des Systems steigt.

Begründet ist diese Eigenschaft dadurch, dass mit zunehmender Aktivität eine größere Anzahl von Sub-Funktionseinheiten aktiviert wird und damit Energie durch das Umladen von kapazitiven vergleichbaren schaltungstechnischen Elementen, wie Funktionseinheiten in CPUs, Speicherzellen in Speicherelementen, Bussysteme, oder dergleichen, benötigt wird.

Die Erfindung berücksichtigt dabei, dass die absolute Größe dieses Anstiegs sowie der zeitliche Verlauf abhängig von der spezifischen Implementierung sind. Der zugrundeliegende Zusammenhang bietet aber in praktisch allen Fällen eine nutzbare Indikation für den Verlauf der Aktivität, so dass die Erfindung in nahezu allen elektronischen Systemen vorteilhaft implementiert werden kann.

Das Prinzip des dargestellten Ausführungsbeispiels beruht darauf, dass es die aktuelle Stromaufnahme eines (Teil-) Systems misst und durch erfindungsgemäß an die konkrete Schaltung angepasste zeitliche Differenzierung des Signals den Verlauf des Stromgradienten ermittelt.

Dieser Gradient wird wiederum genutzt, um das System bezüglich des Energieverbrauchs durch die erfindungsgemäße HW-Schaltung zu steuern bzw. zu regeln, etwa durch Aktivierung oder Deaktivierung von Steuersignalen oder insbesondere durch Regelung der Taktfrequenz.

Ein positiver Gradient führt dabei zu einer Erhöhung und ein negativer Gradient zur Reduzierung der Taktfrequenz des (Teil-)Systems.

Im Folgenden wird eine konkrete schaltungstechnische Realisierung des zuvor prinzipiell erläuterten Ausführungsbeispiels des erfindungsgemäßen Verfahrens beschrieben.

Zur Gewährleistung der Übersicht beschränkt sich die Darstellung dabei auf die Regelung von Taktfrequenzen. Die Steuerung bzw. Regelung von anderen bzw. weiteren zur Beeinflussung des Energieverbrauchs geeigneten Stellgrößen ist natürlich ebenso möglich. Dies ist insbesondere dann sinnvoll, wenn Funktionseinheiten Voreinstellungen enthalten, die durch Registereinstellungen Regelungen erlauben.

In Figur 1 sind exemplarisch Funktionseinheiten FE1 bis FEn E1.._ FN1 eines (Teil-)Systems dargestellt, dabei werden die dargestellten Funktionseinheiten FE1 bis FEn eines elektronischen Systems gemäß dem Ausführungsbeispiel gespeist von Spannungsversorgungen VCC1 bis VCCn.

Eine jeweilige momentane Taktversorgung ist in der Darstellung durch Signale CLK1 bis CLKn gegeben.

Die jeweilige momentane Stromaufnahme ist dabei in den in der Darstellung angegebenen Signalen IFE1 bis IFEn des Ausführungsbeispiels zu entnehmen. Gemäß der Erfindung wird die jeweilige Stromaufnahme gemessen. Dies erfolgt in einer in der Zeichnung mit Block M bezeichneten Einheit.

In einem nächsten Schritt wird hieraus eine zeitliche Differenzierung der Stromaufnahme durchgeführt und aus der zeitlichen Differenzierung der Messwerte miFE1 bis miFEn werden Stromgradienten diFEl bis diFEn ermittelt.

Diese werden nun Regelungseinrichtungen REGELUNGl...REGELUNGn zugeführt, welche dann Regelsignale RCLK1 bis RCLKn generieren, die wiederum, zusammen mit Mastertakten MCLK1 bis MCLKn in Taktgeneratoreinheiten TGA1...TGAn die Taktversorgungen (Taktsignale) CLK1 bis CLKn regeln.

Zu erkennen ist ferner, dass bei dem Ausführungsbeispiel alle Regelsignale mit allen Taktgeneratoreinheiten verschaltet sind, so dass sich in vorteilhafter Weise Abhängigkeiten der Funktionseinheiten untereinander berücksichtigen und nutzen lassen.

In Figur 2 ist beispielhaft schematisch die Abhängigkeit zwischen einer vorstehend beschriebenen Stromaufnahme IFEx, einem hierzu ermittelten Stromgradienten diFEEx, sowie der erzeugten Regelsignale RCLKx und des daraus resultierenden Taktversorgungssignals CLKx dargestellt.

Hieran lässt sich noch einmal der erfinderische Gedankengang erläutern. Zu erkennen ist, dass zu einem ersten Zeitpunkt T1 aufgrund einer erhöhten Aktivität die Stromaufnahme des Systems ansteigt. Aus dem positiven Gradienten wird nun erfindungsgemäß in Kombination mit einer entsprechenden Regelungsvorschrift, die ein Implementierungsdetail ist, welches je nach den Anforderungen des erfindungsgemäß zu regelnden elektronischen Systems entwickelt wird, also beispielsweise durch Simulationen optimiert bzw. angepasst wird, ein Regelsignal generiert, welches über die Taktgeneratoreinheit zu einem zweiten Zeitpunkt T2 zu einer definierten Erhöhung der Frequenz der Taktversorgung führt.

Im vorliegenden Fall wird die in der Darstellung erkennbare durch die Erhöhung der Frequenz des Taktsignals hervorgerufene Steigerung der Stromaufnahme IFEx zwischen dem zweiten Zeitpunkt T2 und einem dritten Zeitpunkt T3 durch die Regelung - entsprechend der für die beispielhafte Schaltung angenommene Regelungsvorschrift - ignoriert.

Zu einem vierten Zeitpunkt T4 führt eine Reduzierung der Aktivität jedoch zu einem negativen Stromgradienten diFEx, der über die Regelung und die Taktgeneratoreinheit zu einer definierten Senkung der Taktfrequenz CLKx zu einem fünften Zeitpunkt T5 führt. Eine daraus resultierende Reduzierung der Stromaufnahme IFEx, welche in der Darstellung erkennbar ist und zwischen dem fünften Zeitpunkt T5 und einem sechsten Zeitpunkt T6 auftritt, wird wiederum gemäß angenommener Regelungsvorschrift ignoriert.

Eine durch abermalige Verringerung der Systemaktivität hervorgerufene Reduzierung der Stromaufnahme IEFx zu einem siebten Zeitpunkt T7 führt zu einer erneuten Senkung der Taktfrequenz. Diese Senkung ist in diesem Beispiel geringer als jene zum fünften Zeitpunkt T5; die Änderung der Frequenz (wie auch das Regelverhalten allgemein) kann durch die Regelvorschrift an das jeweilige System angepasst werden.

Die konkrete technische Implementierung der beschriebenen Funktionseinheiten kann auf vielfältige Weise realisiert werden und ist stark abhängig von der Art des Systems.

Im Umfeld von Kommunikationsendgeräten bietet sich die Implementierung mittels A/D-Wandler, insbesondere für die Stromaufnahme sowie ergänzend die Implementierung der Regelung und der Taktgeneratoreinheit in einem FGPA, beispielsweise mit direkter Taktausgabe oder kombiniert mit PLL an.

Die Kosten für die Implementierung sind vernachlässigbar im Verhältnis zu den erreichbaren Einsparungspotentialen. In bestimmten Applikationen ist es auch vorstellbar, dass die Regelung nicht in HW, sondern in Software, beispielsweise als Teil einer - auch aus anderen Gründen immer aktiven - Funktionseinheit realisiert ist.

Weiterhin ist es auch möglich, das erfindungsgemäße Verfahren vorteilhaft in hochintegrierte Bausteine, speziell im Umfeld von so genannten embedded Systemen zu integrieren. Neben der Verwaltung bausteininterner Funktionsblöcke können auch, durch Bereitstellung entsprechender Ressourcen, externe Blöcke kontrolliert werden. Die Regelvorschrift kann dabei durch entsprechende Parametrisierungsoptionen flexibel gestaltet werden.

Ein wesentlicher Vorteil des hier beschriebenen Verfahrens liegt darin, dass im Gegensatz zu Software-gesteuerten Ansätzen die Energieverbrauchsoptimierung rein Hardware-technisch erreicht wird. D.h. insbesondere seitens der Software muss kein "Bewusstsein" über die zugrundeliegende Hardware-Architektur vorhanden sein und es müssen auch in der Software keine entsprechenden Implementierungen eingebracht werden.

Dies ist insbesondere dann von Vorteil, wenn, wie typischerweise in embedded Systemen, häufig mehrere Funktionseinheiten/Rechnereinheiten ohne ein explizites Betriebssystem bzw. Scheduler-Konzept vorliegen.

Häufig werden in embedded Systemen auch Programme verwendet, für die keine Source-Codes vorhanden sind, so dass Anpassungen nicht oder kaum möglich sind. Weiterhin setzt eine SWgesteuerte Vorgehensweise voraus, dass mindestens eine Einheit im Betrieb bleibt, um die Regelung durchzuführen.

Das hier beschriebene Verfahren erlaubt im Prinzip sehr komplexe Regelungsmechanismen; in den meisten Einsatzfällen ist jedoch davon auszugehen, dass relativ einfache Implementierungen ausreichen, um einen Großteil der potentiellen Einsparpotentiale zu erreichen, wie im Folgenden am Beispiel des Einsatzes der Erfindung in einem (Kommunikations-)Endgerät angerissen wird.

Ein wesentlicher Vorteil des Verfahrens besteht auch darin, dass die Wirksamkeit auch dann sichergestellt ist, wenn relativ häufig, beispielsweise im Sekunden- oder Minutenbereich "turnusmäßige" Aktivitäten eines Systems durchgeführt werden, wie zum Beispiel Polling-Interrupts, Datenbankupdates, filesystem-Bereinigungen und dergleichen, da die erfindungsgemäße Regelung im Millisekundenbereich wirkt.

Zur weiteren Veranschaulichung des erfindungsgemäßen Verfahrens, weiterer Vorteile sowie eines geeigneten Systems, soll beispielhaft ohne zeichnerische Darstellung die Realisierung in einem schnurgebundenen Kommunikationsendgerät erläutert werden. Dabei ist klar, dass der Einsatz des Verfahrens sich nicht auf diesen Einsatzfall beschränkt, sondern prinzipiell in allen elektronischen Systemen anwendbar ist.

Hierzu werden als geeignetes System die Endgeräte der OpenStage-Familie der Firma Siemens Enterprise Communication Networks betrachtet, die sich im Wesentlichen durch ihre Netz-Technologie (Time Division Multiplex "TDM" bzw. Internet Protokoll IP basiert) sowie durch die Mensch Maschine Schnittstellen (MMI) und die verfügbare Funktionalität hinsichtlich der Applikationen unterscheiden.

Neben gemeinsamen Funktionseinheiten, welche jedoch zum Teil unterschiedlich implementiert sind, wie beispielsweise Datenschnittstellen, Tastatur, Display oder Voice Processing, gibt es prinzipiell unterschiedliche Funktionen, wie zum Beispiel einen Ethernet-Switch, der nur in den IP-basierenden Geräten der OpenStage Familie vorhanden ist.

Im zum Zeitpunkt der Erfindung realisierten Normalbetrieb dieser Geräte ergeben sich daraus unterschiedliche Werte für den Energiebedarf, welcher zwischen ca. 2W und 15W liegt. Über die Produktlebensdauer summieren sich dadurch die operativen Kosten für die Energie auf Werte in der Größenordnung der Gerätekosten.

Im spezifischen Fall von den genannten Endgeräten ist es dabei ausreichend, zwei Betriebszustände zu unterscheiden, um den Großteil des Energiespar-Potentials zu realisieren: Aktiv- und Bereitschaftszustand. Der Aktivzustand umfasst dabei den Zustand Ruf und Gespräch (mit und ohne Freisprechen), die restliche Zeit ist durch den Bereitschaftszustand gekennzeichnet. Aus den üblichen Verkehrswerten ergibt sich ein Anteil des Bereitschaftszustandes von ca. 95%. Daher ist es in diesem Fall nicht Ziel führend, Optimierungen im Aktivzustand vorzunehmen, vielmehr muss der Energiebedarf im Bereitschaftszustand auf ein Minimum reduziert werden.

Durch das erfindungsgemäße Verfahren kann dies sehr einfach und effizient realisiert werden. Im Bereitschaftszustand reicht es aus, die Systemrechenleistung sowie die Funktionalität der Interfaces auf ein Maß zu reduzieren, das ausreicht, eingehende Anforderungen an das Gerät, wie beispielsweise ein Tastendruck oder Meldungsverkehr über Datenschnittstellen, zu erkennen. Der aufgrund der Anforderungen steigende Stromverbrauch wird durch die erfindungsgemäße Regelung dergestalt umgesetzt, dass unmittelbar die maximalen Taktfrequenzen erreicht werden, um so die optimale Rechenleistung der Systeme und schnellstmögliche Reaktionszeiten sicherzustellen. Dabei wird erfindungsgemäß die Regelung vorteilhaft so parametrisiert, dass bei Reduzierung des Stromverbrauchs die Taktfrequenzen stufenweise verringert werden, um zu gewährleisten, dass nur dann, wenn definitiv der Bereitschaftszustand vorliegt, die Rechenleistung zurückgenommen wird. Somit reicht in diesem Einsatzfall eine sehr einfache Regelung aus.

Besonders vorteilhaft ist das Verfahren auch dadurch, dass die verschiedenen Software-Programme, die in unterschiedlichen Varianten und Ausprägungen in den Geräten implementiert sind, nicht in das Prozedere mit eingebunden sein müssen; d.h. es steht "automatisch" zu jedem Zeitpunkt die benötigte Rechenleistung zur Verfügung, wobei gleichzeitig der mittlere Energieverbrauch auf einen Bruchteil gesenkt wird.

## Patentansprüche

1. Verfahren zum Betreiben eines aus mehreren Funktionseinheiten (FE1, ..., FEn) bestehenden elektronischen Systems, bei dem die Energieaufnahme von Funktionseinheiten (FE1, ..., FEn) des Systems derart reguliert wird,
i. dass aufgrund zumindest eines innerhalb des Systems erfassten zeitlichen Verlaufs des Stroms (IFE1, ..., IFEx, ..., IFEn) ein durch zeitliche Differenzierung (d/dt) zumindest teilweise schaltungstechnisch generierter Gradientenwert (diFE1, ..., diFEx, ..., diFEn) des Stromwertes für Funktionseinheiten (FE1, ..., FEn) getrennt gebildet wird,
ii. dass auf Grundlage des Gradientenwerts (diFE1, ..., diFEx, ..., diFEn) jeweils die Regelung (Regelung 1, ..., Regelung n) zumindest eines Taktsignals (CLK1, ..., CLKx, ..., CLKn) eines der Funktionseinheiten (FE1, ..., FEn) des Systems erfolgt,
iii. dass die Regelsignale (RCLK1, ..., RCLKx, ..., RCLKn) mit die Taktsignalregelung bewirkenden Taktgeneratoreinheiten (TGA1, ..., TGAn) verschaltet sind, wodurch Abhängigkeiten von Funktionseinheiten (FE1, ..., FEn) des Systems untereinander berücksichtigt und genutzt werden, und
iv. dass die Regelung zumindest eines Taktsignals des Systems so durchgeführt wird, dass bei positivem Gradienten eine höhere Taktung gewährt wird, während bei negativem Gradienten die Taktung reduziert wird, wobei die Regelung des Systems derart erfolgt,
v. dass wenn zu einem ersten Zeitpunkt (T1) aufgrund einer erhöhten Aktivität die Stromaufnahme (IFEx) des Systems ansteigt, aus dem positiven Gradienten (diFEx) mit einer entsprechenden Regelungsvorschrift, welche je nach den Anforderungen des zu regelnden elektronischen Systems vorgegeben wird, ein Regelsignal (RCLKx) generiert wird, welches über die Taktgeneratoreinheit zu einem zweiten Zeitpunkt (T2) zu einer definierten Erhöhung der Frequenz der Taktversorgung (CLKx) führt, wobei eine durch die Erhöhung der Frequenz des Taktsignals (CLKx) zwischen dem zweiten Zeitpunkt (T2) und einem dritten Zeitpunkt (T3) hervorgerufene Steigerung der Stromaufnahme (IFEx) ignoriert wird, und
vi. dass wenn zu einem weiteren Zeitpunkt (T4) aufgrund einer verringerten Aktivität die Stromaufnahme des Systems absinkt, aus dem negativen Gradienten (diFEx) mit einer entsprechenden Regelungsvorschrift, welche je nach den Anforderungen des zu regelnden elektronischen Systems vorgegeben wird, ein Regelsignal (RCLKx) generiert wird, welches über die Taktgeneratoreinheit zu einem nachfolgenden Zeitpunkt (T5) zu einer definierten Senkung der Frequenz der Taktversorgung führt (CLKx), wobei eine durch die Absenkung der Frequenz des Taktsignals (CLKx) zwischen dem nachfolgenden Zeitpunkt (T5) und einem nachfolgenden Zeitpunkt (T6) hervorgerufene Reduzierung der Stromaufnahme (IFEx) ignoriert wird.

2. Verfahren nach einem der vorhergehenden Ansprüche, **dadurch gekennzeichnet, dass** der Stromverlauf einem Analog-Digital-Wandler "A/D-Wandler" (M1, ..., Mn) zugeführt wird, wobei das Ausgangssignal (miFE1, ..., miFEn) des A/D-Wandlers der Gradientenwertgenerierung (d/dt) zugeführt wird.

3. Verfahren nach einem der vorhergehenden Ansprüche, **dadurch gekennzeichnet, dass** die Taktsignalregelung durch einen "Field-Programmable Gate Array" FPGA (TGA1, ..., TGAn) initiiert wird.

4. Verfahren nach dem vorhergehenden Anspruch, **dadurch gekennzeichnet, dass** das Taktsignal (CLK1, ..., CLKx, ..., CLKn) als Ausgangssignal des FPGA (TGA1, ..., TGAn) an das System weitergegeben wird.

5. Verfahren nach einem der Ansprüche 1 bis 4, **dadurch gekennzeichnet, dass** die Taktsignalregelung durch ein "Phase-locked-loop" PLL initiiert wird.

6. Verfahren nach dem vorhergehenden Anspruch, **dadurch gekennzeichnet, dass** im Falle einer Taktsignalregelung seitens des PLL, das Taktsignal als Ausgangssignal des PLL an das System weitergegeben wird.

7. Verfahren nach einem der vorhergehenden Ansprüche, **dadurch gekennzeichnet, dass** die Regelung des Taktsignals (CLK1, ..., CLKx, ..., CLKn) die Frequenz des Taktsignals betrifft, wobei vorzugsweise die Änderung der Frequenz durch eine Regelvorschrift erfolgt.

8. Verfahren nach einem der vorhergehenden Ansprüche, **dadurch gekennzeichnet, dass** die Taktsignalregelung des Systems durch mindestens einen Prozess gesteuert wird, wobei der Prozess insbesondere in einem stets aktiven Teil des Systems durchgeführt wird.

9. Verfahren nach einem der vorhergehenden Ansprüche, **dadurch gekennzeichnet, dass** die Taktsignalregelung derart parametrisiert durchgeführt wird, dass die Reaktion auf Gradientenwerte (diFEx)festlegbar ist.

10. Verfahren nach einem der vorhergehenden Ansprüche, **dadurch gekennzeichnet, dass** die Taktsignalregelung das Ausgangssignal derart bereithält, dass zum System externe Geräte manipuliert werden.

11. Anordnung zum Betreiben eines elektronischen Systems, **dadurch gekennzeichnet, dass** Mittel zur Durchführung des Verfahrens gemäß einem der vorhergehenden Verfahrensansprüche vorgesehen sind.

12. Anordnung nach dem Anspruch 11, **dadurch gekennzeichnet, dass** die Mittel zumindest teilweise als hochintegrierte Schaltung ausgestaltet sind.

## Claims

1. A method for operating an electronic system consisting of several functional units (FE1, ..., FEn), wherein the energy consumption of functional units (FE1, ..., FEn) of the system is controlled, such
i. that a gradient value (diFE1, ..., diFEx, ..., diFEn) of the current value for functional units (FE1, ..., FEn), generated at least partially by temporal differentiation (d/dt) using circuit technology, is formed separately due to at least one temporal progression of the current detected within the system (IFE1, ..., IFEx, ..., IFEn),
ii. that the control (control 1, ..., control n) of at least one clock signal (CLK1, ..., CLKx, ..., CLKn) of one of the functional units (FE1, ..., FEn) of the system takes place in each case on the basis of the gradient value (diFE1, ..., diFEx, ..., diFEn),
iii. that the control signals (RCLK1, ..., RCLKx, ..., RCLKn) are interconnected with clock generator units (TGA1, ..., TGAn) effecting the clock signal control, whereby dependencies of functional units (FE1, ..., FEn) of the system are considered and used among each other, and
iv. that the control of at least one clock signal of the system is performed, such that a higher clock rate is allowed in the case of a positive gradient, while the clock rate is reduced in the case of a negative gradient, whereby control of the system takes place, such
v. that if the current consumption (IFEx) of the system increases at a first time instance (T1) due to increased activity, a control signal (RCLKx) is generated based on the positive gradient (diFEx) and with a corresponding control rule, which is predefined in accordance with the requirements of the electronic system to be controlled, which control signal produces a defined increase in the frequency of the clock generation (CLKx) at a second time instance (T2) via the clock generator unit, whereby the increase in the current consumption (IFEx) resulting from the increase of the frequency of the clock signal (CLKx) between the second time instance (T2) and a third time instance (T3) is ignored, and
vi. that if the current consumption of the system drops at a further time instance (T4), as a result of a reduced activity, a control signal (RCLKx) is generated based on the negative gradient (diFEx) and with a corresponding control rule, which is specified in accordance with the requirements of the electronic system to be controlled, which control signal produces a defined reduction in the frequency of the clock generation (CLKx) via the clock generator unit at a subsequent time instance (T5), whereby the reduction in the current consumption (IFEx) resulting from the reduction of the frequency of the clock signal (CLKx) between the subsequent instance (T5) and a subsequent time instance (T6) is ignored.

2. The method according to one of the preceding claims, **characterized in that** the current profile is supplied to an analog-to-digital converter "A/D converter" (M1, ..., Mn), whereby the output signal (miFE1, ..., miFEn) of the A/D converter is supplied to the gradient value generator (d/dt).

3. The method according to one of the preceding claims, **characterized in that** the clock signal control is initiated by a "Field-Programmable Gate Array" FPGA (TGA1, ..., TGAn).

4. The method according to the preceding claim, **characterized in that** the clock signal (CLK1, CLKx, ..., CLKn) is transmitted to the system as an output signal of the FPGA (TGA1, ..., TGAn).

5. The method according to one of Claims 1 to 4, **characterized in that** the clock signal control is initiated by a "phase-locked-loop" PLL.

6. The method according to the preceding claim, **characterized in that** in the case of a clock signal control by the PLL, the clock signal is transmitted to the system as an output signal of the PLL.

7. The method according to one of the preceding claims, **characterized in that** the control of the clock signal (CLK1, ..., CLKx, ..., CLKn) relates to the frequency of the clock signal, wherein the change of the frequency preferably results from a control rule.

8. A method according to one of the preceding claims, **characterized in that** the clock signal control of the system is controlled by at least one process, wherein the process is performed, in particular, in a permanently active part of the system.

9. The method according to one of the preceding claims, **characterized in that** the clock signal control is performed in a parameterized way, such that the response to gradient values (diFEx) may be determined.

10. The method according to one of the preceding claims, **characterized in that** the clock signal control provides the output signal, such that devices external to the system are manipulated.

11. An arrangement for operating an electronic system, **characterized in that** means for carrying out the method according to one of the preceding method claims are provided.

12. The arrangement according to claim 11, **characterized in that** the means are designed, at least partially, as a highly integrated circuit.

## Revendications

1. Procédé de fonctionnement d'un système électronique se composant de plusieurs unités fonctionnelles (FE1, ..., FEn), dans lequel la consommation d'énergie des unités fonctionnelles (FE1, ..., FEn) du système est régulée de manière
i. que, en raison d'au moins une variation au cours du temps du courant (IFE1, ..., IFEx, ..., IFEn) détectée à l'intérieur du système, une valeur de gradient (diFE1, ..., diFEx, ..., diFEn), générée au moins en partie selon une technique des circuits par une différenciation en fonction du temps (d/dt), de la valeur du courant pour des unités fonctionnelles (FE1, ..., FEn) est formée de manière séparée,
ii. que, sur la base de la valeur de gradient (diFE1, ..., diFEx, ..., diFEn) est effectuée chaque fois la régulation (Regelung 1, ..., Regelung n) d'au moins un signal d'horloge (CLK1, ..., CLKx, ..., CLKn) d'une des unités fonctionnelles (FE1, ..., FEn) du système,
iii. que les signaux de régulation (RCLK1, ..., RCLKx, ..., RCLKn) sont connectés à des unités génératrices d'horloges (TGA1, ..., TGAn) provoquant la régulation du signal d'horloge, moyennant quoi des dépendances des unités fonctionnelles (FE1, ..., FEn) du système sont prises en compte les unes parmi les autres et utilisées, et
iv. que la régulation d'au moins un signal d'horloge du système est exécutée de sorte que, en cas de gradient positif, une cadence plus élevée est assurée tandis que, en cas de gradient négatif, la cadence est réduite, dans lequel la régulation du système est effectuée de manière
v. que, lorsque, à un premier instant (T1) en raison d'une activité en augmentation, la consommation de courant (IFEx) du système croît, à partir du gradient positif (diFEx) est généré avec une directive de régulation correspondante, qui est spécifiée au préalable selon les exigences du système électronique à réguler, un signal de régulation (RCLKx) qui, par le biais de l'unité génératrice d'horloges, aboutit à un deuxième instant (T2) à une augmentation définie de la fréquence du cadencement par horloge (CLKx), dans lequel une croissance de la consommation de courant (IFEx), suscitée par l'augmentation de la fréquence du signal d'horloge (CLKx) entre le deuxième instant (T2) et un troisième instant (T3), est ignorée, et
vi. que, lorsque, à un autre instant (T4) en raison d'une activité en diminution, la consommation de courant du système baisse, à partir du gradient négatif (diFEx) est généré avec une directive de régulation correspondante, qui est spécifiée au préalable selon les exigences du système électronique à réguler, un signal de régulation (RCLKx) qui, par le biais de l'unité génératrice d'horloges, aboutit à un instant suivant (T5) à une baisse définie de la fréquence du cadencement par horloge (CLKx), dans lequel une réduction de la consommation de courant (IFEx), suscitée par la baisse de la fréquence du signal d'horloge (CLKx) entre l'instant suivant (T5) et un instant suivant (T6), est ignorée.

2. Procédé selon l'une quelconque des revendications précédentes, **caractérisé en ce que** la variation de courant est amenée à un convertisseur analogique-numérique « convertisseur A-D » (M1, ..., Mn), dans lequel le signal de sortie (miFE1, ..., miFEn) du convertisseur A-D est ajouté à la génération de la valeur de gradient (d/dt).

3. Procédé selon l'une quelconque des revendications précédentes, **caractérisé en ce que** la régulation de signal d'horloge est déclenchée par un « circuit intégré prédiffusé programmable », FPGA, (TGA1, ..., TGAn).

4. Procédé selon la revendication précédente, **caractérisé en ce que** le signal d'horloge (CLK1, ..., CLKx, ..., CLKn) est transmis au système en tant que signal de sortie du FPGA (TGA1, ..., TGAn) .

5. Procédé selon l'une quelconque des revendications 1 à 4, **caractérisé en ce que** la régulation de signal d'horloge est déclenchée par une « boucle à verrouillage de phase », PLL.

6. Procédé selon l'une quelconque des revendications précédentes, **caractérisé en ce que**, dans le cas d'une régulation de signal d'horloge au niveau de la PLL, le signal d'horloge est transmis au système en tant que signal de sortie de la PLL.

7. Procédé selon l'une quelconque des revendications précédentes, **caractérisé en ce que** la régulation du signal d'horloge (CLK1, ..., CLKx, ..., CLKn) concerne la fréquence du signal d'horloge, dans lequel la modification de la fréquence est effectuée de préférence par une directive de régulation.

8. Procédé selon l'une quelconque des revendications précédentes, **caractérisé en ce que** la régulation de signal d'horloge du système est commandée par au moins un processus, dans lequel le processus est exécuté en particulier dans une partie toujours active du système.

9. Procédé selon l'une quelconque des revendications précédentes, **caractérisé en ce que** la régulation de signal d'horloge est exécutée selon des paramètres de manière que la réaction aux valeurs de gradient (diFEx) peut être déterminée.

10. Procédé selon l'une quelconque des revendications précédentes, **caractérisé en ce que** la régulation de signal d'horloge prépare le signal de sortie de manière que des appareils externes au système sont manipulés.

11. Dispositif de fonctionnement d'un système électronique, **caractérisé en ce que** sont prévus des moyens pour l'exécution du procédé selon l'une quelconque des revendications précédentes.

12. Dispositif selon la revendication 11, **caractérisé en ce que** les moyens sont conçus au moins en partie en tant que circuit intégré à très grande échelle.
